# FASCICULE DE BREVET EUROPEEN

(11) **EP 1 331 843 B1**
(45) Date de publication et mention de la délivrance du brevet: **16.07.2008**
(21) Numéro de dépôt: 01967456.3
(22) Date de dépôt: 07.09.2001
(51) Int. Cl.: A01G 25/00

(54) **ELEMENTS ET COUSSINS DE RETENTION D'EAU, LEURS PROCEDES DE FABRICATION ET LEURS APPLICATIONS**
ELEMENTE UND WASSERSPEICHERUNGSKISSEN, IHRE HERSTELLUNGSVERFAHREN UND ANWENDUNGEN
WATER RETENTION ELEMENTS AND CUSHIONS, METHODS FOR MAKING SAME AND USE THEREOF

(30) Priorité: 08.09.2000 FR 0011492
(43) Date de publication de la demande: 06.08.2003
(73) Titulaire: Technique Etancheite Centre, 41130 Selles sur Cher (FR)
(72) Inventeur: DENIAU, Francis, F-41130 Gièvres (FR)
(74) Mandataire: Hirsch & Associés
(86) Numéro de dépôt international: PCT/FR2001/002789
(87) Numéro de publication internationale: WO 2002/019802

(56) Documents cités:
- EP-A- 0 478 474
- DE-A- 3 136 907
- FR-A- 2 368 883
- US-A- 5 081 791
- US-A- 5 675 929

## Description

La présente invention concerne des coussins ou cellules ou éléments de rétention d'eau, comprenant un matériau perméable et apte à absorber de l'eau et à libérer progressivement cette dernière dans un milieu sec tel qu'un sol insuffisamment arrosé. Elle concerne également les procédés de fabrication et les applications de ces coussins ou cellules ou éléments de rétention d'eau.

De nombreux procédés, matériaux et équipements tels que des substrats de rétention d'eau sont proposés pour réaliser les cultures hors sol ou au-dessus d'un sol ne retenant pas l'eau. Parmi ces substrats, ceux à base de fibres ou de laines minérales décrits dans WO-94/03045, EP-A-670 669, EP-A-388 287 et FR-A-2 581 503 se révèlent avoir les meilleures capacités de rétention d'eau tout en présentant une excellente porosité. Ces substrats présentent par contre l'inconvénient d'être relativement onéreux. En outre, lorsqu'il s'agit de maintenir l'humidité d'un sol trop maigre et poreux pour supporter la végétation en saison sèche, ces substrats en laine minérale se révèlent libérer l'eau qu'ils contiennent trop rapidement du fait de leur grande porosité. Un autre inconvénient qui se manifeste à l'usage de ces substrats d'humidification constitués seulement de fibres minérales réside dans la pénétration des racines des plantes à l'intérieur de leur masse, ce qui tend à les faire éclater, à réduire leur capacité de rétention et à rendre leur récupération éventuelle difficile.

Par ailleurs, US-A-5 675 929 décrit une méthode et un support de substrat pour culture de plantes. Le substrat est composé de deux couches : l'une est composé de sable et de ciment et l'autre est composé de charbon actif et de petites pierres sèches agglomérés avec de la résine.

FR-A-2 368 883 décrit un moyen d'irrigation constitué par un produit absorbant à base de polymère contenu dans une enveloppe textile filtrante.

US-A-5 081 791 décrit un support pour culture hors-sol constitué de deux feuilles de cellulose contenant entre-elles des particules super-absorbantes. Ces feuilles sont ensuite enveloppées par une enveloppe en polyéthylène.

La présente invention se propose précisément d'améliorer la capacité de rétention d'eau des sols maigres ou trop poreux pour maintenir la végétation en saison sèche, en disposant dans ces sols des éléments, coussins ou cellules de rétention d'eau qui libèrent l'eau qu'ils retiennent de façon très progressive. Ces éléments ou coussins ou cellules, que l'ont désignera plus généralement par le terme éléments, à faible vitesse de libération de l'eau absorbée doivent cependant présenter une capacité de rétention d'eau importante par rapport à leur poids et à leur volume, et se révéler moins onéreux à préparer que les éléments, coussins ou cellules constitués seulement de fibres ou de laine minérale. Ces éléments, coussins et cellules présentant des propriétés de rétention d'eau importante et de libération progressive de cette eau pourront, grâce à leur prix de revient limité et à leur durabilité, être utiles dans des sols trop maigres ou trop poreux pour assurer la pérennité de la végétation ainsi que sur des terrasses végétalisées, ou des cultures sur un soubassement imperméable et évacuant rapidement les précipitations, ainsi que dans les bacs à plantes.

A cette fin, l'invention propose un élément de rétention d'eau tel que défini dans la revendication 1 et un coussin de rétention d'eau tel que défini dans la revendication 22. L'invention propose aussi différents procédés d'application de l'élément de rétention d'eau ou du coussin de rétention d'eau, lesquels sont définis dans les revendications 30 à 32. Enfin, l'invention propose encore deux procédés de fabrication d'éléments de rétention, lesquels sont respectivement définis par les revendications 25 et 28. Les autres revendications définissent des modes de réalisation préférés de l'invention.

D'autres buts, avantages et caractéristiques apparaîtront à la lecture de la description de divers modes de réalisation des coussins ou cellules ou éléments de rétention d'eau selon l'invention, ainsi que de leurs procédés de fabrication et de leurs applications, faite à titre non limitatif et en regard du dessin annexé dans lequel :
- la figure 1 représente en perspective et en vue extérieure un coussin de rétention d'eau, selon l'invention, de forme cylindrique et enveloppé dans une enveloppe rigide perméable à l'eau ;
- la figure 2 représente, à plus grande échelle, la coupe transversale selon la ligne II-II du coussin de rétention d'eau représenté à la figure 1 ;
- la figure 3 représente, en perspective de dessus et avant l'application de l'enveloppe perméable, une cellule de rétention d'eau, selon l'invention, comportant quatre coussins du type de celui représenté à la figure 1 ;
- la figure 4 représente à plus grande échelle une coupe transversale de la cellule représentée à la figure 3, selon la ligne IV-IV et après la mise en place d'une nappe souple formant la surface supérieure perméable de la cellule ;
- la figure 5 représente en coupe transversale un autre mode de réalisation, non modulaire, d'une cellule formant matelas de rétention d'eau selon l'invention ;
- la figure 6 représente en coupe transversale un élément de rétention d'eau de forme sensiblement sphérique et qui peut prendre d'autres formes et former l'élément de base ou unitaire de masses de rétention d'eau à préparer et/ou à mettre en place ;
- la figure 7 représente une coupe transversale d'une colle dans laquelle des éléments selon l'invention sont inclus.

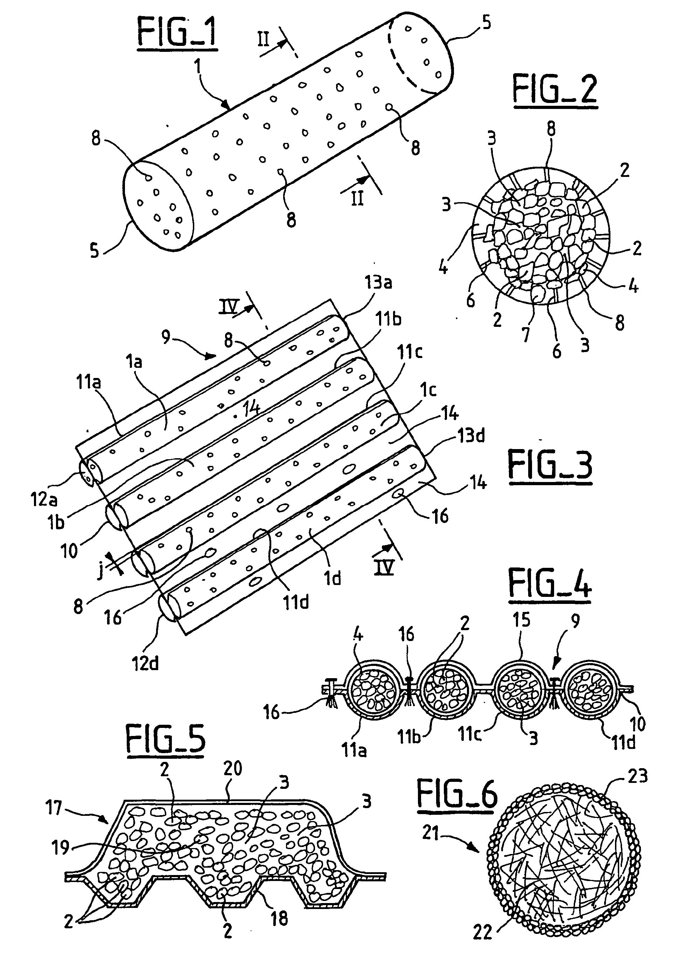

En se reportant aux figures 1 et 2, on a représenté un coussin de rétention d'eau 1 qui présente la forme générale d'un cylindre allongé dont le diamètre est plus généralement compris entre 60 et 100 mm, et dont la longueur est pratiquement comprise entre environ 0,5 et 1,0 m pour former des plaques de rétention d'eau, dont la longueur et/ou la largeur est comprise entre environ 0,5 et 1,0 m. Si l'on se reporte à la vue en coupe de la figure 2, le coussin 1 comprend à l'intérieur des granulats 2, des pierres calcaires dures de carrière qui présentent naturellement une aptitude à absorber l'eau sans se déliter et à libérer progressivement cette eau dans une atmosphère sèche. Les granulats 2 obtenus par broyage de pierres calcaires dures présentent une granulométrie qui, dans la solution qui fournit le meilleur compromis entre la capacité et la vitesse de rétention d'eau d'une part, et la disponibilité en carrière d'autre part, se situe dans la zone de répartition suivante :
0 à 1 mm : environ 10 %
1 à 2 mm : environ 15 %
2 à 5 mm : environ 75 %.

L'expérience a montré qu'une partie (limitée en principe à 10 %) des granulats 2 pouvait présenter une forme relativement pulvérulente et que les plus gros morceaux de granulat ne devaient pas dépasser une taille de 5 mm définie au tamis à mailles carrées de 5 mm, afin d'obtenir une rétention importante d'eau dans les espaces intercalaires 3 entre les morceaux de granulats 2.

Les granulats 2 qui présentent déjà une bonne capacité naturelle de rétention d'eau voient leur capacité de rétention augmenter si on les soumet à une cuisson à une température maximale de 300 C et pendant une durée généralement inférieure à 1 heure, et de préférence supérieure à 30 minutes, cuisson qui ne provoque pas de transformation des carbonates avec formation de chaux vive. Les granulats de pierres calcaires dures assemblés selon la granulométrie préférée indiquée ci-dessus et soumis à une cuisson de dégagement de l'eau se révèlent présenter une capacité pondérale d'absorption d'eau de 90% du poids des granulats séchés, la rétention d'eau descendant à des valeurs de 30 à 40 % du poids du produit séché après plusieurs mois passés dans un sol sec à humidifier. L'amplitude de la rétention d'eau est ainsi de l'ordre de 50% du poids des granulats secs.

Les granulats 2 qui ne présentent pas de cohérence doivent être enveloppés dans une nappe de fibres perméable et imputrescible. On peut utiliser pour cela une nappe "géotextile" comprenant une nappe souple non tissée de fibres polyester qui présente de préférence une densité surfacique comprise entre 400 et 700 g/m² à sec.

Selon un mode de réalisation, le coussin de rétention d'eau 1 en forme de cylindre allongé comprend une masse de granulats 2 mise en forme générale de cylindre dans un moule cylindrique (non représenté) et qui est agglomérée et enrobée par un liant formant une enveloppe rigide 4 perméable à l'eau et comprenant une poudre minérale obtenue à partir ou dérivant des parties pulvérulentes des pierres calcaires formant les granulats 2. Cette poudre minérale incluse dans l'enveloppe 4 peut contenir en poids :
- environ 10 % de résine acrylique,
- environ 15 % en poids de poudre de polystyrène,
- de préférence également des parties en polystyrène d'un diamètre maximal de 1 à 2 mm et éventuellement en forme de billes et/ou de barrettes.

La résine acrylique peut dans certains cas donner une adhérence à l'enveloppe 4, mais cette dernière est en général humidifiée à l'eau, pour former une pâte collante qui entoure la masse des granulats 2 et ferme les extrémités 5 du coussin cylindrique 1. L'enveloppe 4, de par sa nature collante au moment de sa dépose autour de la masse de granulats 2, agglomère et enrobe ces granulats en une masse qui présente une résistance mécanique à l'écrasement du fait de la solidarisation de contact de l'enveloppe 4 avec les granulats 2 sous-jacents, comme le montre la coupe de la figure 2.

Le bloc du coussin 1 enrobé de l'enveloppe 4 collée aux granulats 2 sous-jacents est ensuite soumis à un traitement thermique qui consiste en un séchage progressif de l'eau contenue dans l'enveloppe pâteuse 4 pour éviter la fissuration de cette enveloppe, suivie d'une cuisson du coussin 1 avec son enveloppe à une température maximale de 300°C pendant une durée maximum de 2 à 3 heures. La cuisson réalise plusieurs actions parallèles en synergie. Tout d'abord, elle provoque l'adhérence de l'enveloppe 4 sur elle-même et sur les granulats 2 sous-jacents, par évacuation de l'eau et polymérisation de la résine acrylique, en formant une sorte de "brique de granulats". Ensuite, la cuisson à 300 °C provoque la volatilisation au moins partielle de la poudre de polystyrène ainsi que des barrettes et/ou sphères de polystyrène qui débouchent sur l'extérieur. La volatilisation intérieure des particules de polystyrène augmente la perméabilité de l'enveloppe 4 à la pénétration ou à l'exsudation lente de l'eau, tandis que la volatilisation extérieure des billes et/ou barrettes de polystyrène crée des passages de liaison 6 des granulats 2 avec l'extérieur. On peut donc de façon générale inclure du polystyrène dans l'enveloppe pour le vaporiser ultérieurement. On peut ainsi obtenir une porosité de l'enveloppe adéquate, du fait que le polystyrène vaporisé ménage alors des cavités dans l'enveloppe. Dans les exemples d'enveloppe précédents, il suffit de vaporiser 25% du polystyrène pour obtenir une porosité adéquate. On a représenté sur la figure 2 les passages 6 formés par la volatilisation des barrettes de polystyrène et qui relient directement les granulats 2 à l'atmosphère extérieure, ainsi qu'une cavité sphérique 7 débouchant sur l'extérieur et formée par la volatilisation d'une bille de polystyrène. Les passages 6 et les cavités 7 n'interrompent pas la continuité mécanique de l'enveloppe 4 qui est solidarisée par cuisson sur elle-même et aux granulats 2 sous-jacents. Les passages 6 débouchent à l'extérieur sur des orifices 8 "de porosité" qui sont représentés également sur les figures 2 et 3. La cuisson de l'enveloppe 4 des granulats 2, provoque d'abord la volatilisation du polystyrène pour créer les passages 6 et provoque ensuite l'évacuation de l'eau contenue dans les granulats 2 à l'extérieur, de préférence par les passages 6, mais aussi à travers la porosité de l'enveloppe 4. On voit que l'on peut partir de granulats bruts 2 de pierres calcaires pour former le coussin 1 dans son enveloppe 4 et que la cuisson donnant de la résistance mécanique à cette enveloppe 4 produit également la cuisson des granulats 2 en augmentant leur capacité de rétention d'eau.

Les coussins 1 sont représentés sous la forme d'un cylindre, pour lequel l'enveloppe 3 est relativement facile à mouler, dans un moule comprenant deux coquilles hémicylindriques. D'autres formes sont possibles pour les coussins 1, telles que des formes de galette circulaires plates, de sphères (l'enveloppe 4 présente alors une surface minimale par rapport aux granulats 2) de poutres à section rectangulaire ou carrée (en n'oubliant pas de prévoir de la dépouille pour le moulage de l'enveloppe 4). Dans le mode de réalisation le plus volumineux d'un cylindre de 100 mm de diamètre et de 1 m de longueur, le poids du coussin sec est de l'ordre de 10 kg et le poids du coussin humidifié est de l'ordre de 18 kg, ce qui permet sa manipulation manuelle et sa récupération dans le sol plusieurs années après la pose.

Les coussins 1 peuvent être placés côte à côte sur un sol poreux inapte à retenir l'eau et être recouverts d'une couche de bonne terre apte à supporter la végétation, mais pour limiter la libération de l'eau en direction du sol poreux ou trop perméable, les coussins 2 sont de préférence groupés sur un coussin 9 en forme de plaque tel que représenté sur les figures 3 et 4.

Le coussin 9 présente une coque inférieure 10 en un matériau imperméable à l'eau et imputrescible. La coque 10 réalisée de préférence par moulage en un matériau tel que le polyéthylène, le bitume armé, les polyoléfines HPDE, présente à la fois une grande souplesse pour s'adapter aux irrégularités du sol ou du support sur lequel est posé la coque, et une grande résistance au déchirage et à la fissuration. La coque 10 forme une série de bacs parallèles (sur les figures 3 et 4, quatre bacs 11a à 11d sont représentés) allongés de rétention de liquide, des joues 12a à 12d, 13a à 13d étant prévues sur les côtés des bacs pour les fermer latéralement.

Les bacs 11a à 11d présentent une forme hémicylindrique conjuguée de la forme cylindrique du coussin 1 représenté sur les figures 1 et 2, mais pour faciliter la mise en place des coussins la à 1d dans leurs bacs correspondants 11a à 11d, ceux-ci présentent des diamètres et des longueurs légèrement supérieurs à ceux des coussins, en laissant ainsi apparaître un léger jeu diamétral j (voir la figure 3) entre le coussin 1 et son bac de réception 11.

La coque 10 qui présente une forme générale plate comporte entre les bacs 11a à 11d des intervalles 14 sensiblement plats qui relient les bacs continus, tels que 11a et 11b, 11c et 11d. Les intervalles 14 existent également au-delà des bacs d'extrémité 11a et 11d de la cellule, pour assurer le raidissement latéral du bac et l'appui éventuel sur une cellule voisine.

La moitié supérieure des coussins la à 1d dépasse au-dessus de la coque 10 et est recouverte d'une enveloppe supérieure 15 en nappe de fibres de polyester imputrescible et perméable à l'eau. La nappe 15 est fixée ou accrochée (par exemple par des clous à encliquetage 16) sur les intervalles 14 de la coque 10 pour retenir en position les coussins 1a à 1d de rétention d'eau de façon simple dans leur bac 11a à 11d de rétention de liquide, en bloquant le transfert de l'eau vers le bas. La partie dépassante des coussins la à 1d forme la surface de transfert d'eau vers le sol à humidifier situé au-dessus, via l'enveloppe supérieure 15.

Sur la figure 5, est représentée une variante plus rustique et non modulaire d'une cellule de rétention d'eau 17 utilisant les principes de l'invention. La cellule 17 comporte, comme la cellule 9, une coque inférieure 18 en un matériau imperméable et imputrescible tel que la matière plastique ou le bitume renforcé ou armé par des fibres.

La coque 18 présente ici une section transversale raidie par des ondulations en trapèze et formant au moins un bac de rétention de liquide et de captage d'eau et une barrière à la descente de l'humidité. La coque 18 est remplie de granulats 2 de pierres calcaires créant des espaces intercalaires 3 destinés à se remplir d'eau retenue par capillarité et qui sont identiques aux granulats 2 du coussin 1 représentés sur les figures 1 et 2, c'est-à-dire qui ont subi une cuisson destinée à augmenter leur porosité à l'eau. Le remplissage en granulats 2 de la cellule 17 forme un tas 19 qui déborde au-dessus de la coque 18 et qui est recouvert d'une enveloppe perméable 20 non tissée du même type que la nappe 15, c'est-à-dire de préférence en nappe de fibres polyester et qui est fixée à la périphérie de la coque inférieure 18 pour retenir en place le tas 19 qui va libérer vers le haut, travers l'enveloppe 20, l'eau qu'il a retenu

La cellule 17 apparaît certes plus rustique à fabriquer pour un même volume de granulat 2, que le coussin 9, mais elle se révèle plus fragile et moins modulaire que ce dernier. Le coussin 9 peut en effet être formé in situ sur une couche de terre poreuse ou un support tel qu'une terrasse, en mettant en place manuellement d'abord la coque 10, en vérifiant la continuité du niveau de chaque bac 11a à 11d. On peut en suite placer manuellement chacun des coussins 1a à 1d dans le bac correspondant et recouvrir l'ensemble des coussins mis en place dans les bacs, de l'enveloppe 15 qui est ensuite accrochée sur les intervalles 14.

L'élément de rétention d'eau 21 représenté sur la figure 6 peut utiliser pour sa structure intérieure de la laine minérale, bien connue dans cette application, mais qui présente l'inconvénient de libérer très rapidement l'eau retenue, mais utilise plutôt de préférence de la matière cellulosique qui présente un pouvoir de rétention d'eau par capillarité élevé avec un faible poids à sec. On peut également prévoir d'inclure du papier journal ou du carton de récupération dans la matière cellulosique. Le papier ou le carton peuvent par exemple être transformés en pâte, puis être éventuellement mélangée à de la colle à papier. On peut également prévoir d'inclure de l'engrais ou un produit promoteur de plantes, ou encore un herbicide dans la matièe cellulosique. La matière cellulosique qui peut être de la laine de cellulose est rassemblée en une boule 22 de forme générale sphérique et qui est enrobée par un liant formant une enveloppe rigide 23 analogue à l'enveloppe rigide 4 du coussin de rétention cylindrique 1 représenté sur les figures 1 et 2. L'enveloppe 23 qui peut comprendre un assemblage humide et collant selon les proportions suivantes :
- poudre d'ardoise et/ou talc de granulométrie inférieure à 0,5 mm ;
- résine acrylique à raison de 1,5 à 2,5% en poids de la poudre ;
- le cas échéant, de 1 à 2 % en volume de la poudre d'ardoise et/ou de talc, d'une poudre de polystyrène,
mais qui peut également être réalisée par surfaçage ou enrobage des cellules revêtues de résine acrylique avec un minéral en grains à porosité plus réduite que la matière cellulosique, ne nécessite pas de cuisson mais seulement un séchage à 40° dans un four ou une chambre de séchage. La perméabilité de l'enveloppe 23 éventuellement augmentée comme pour les figures 1 et 2 par des passages de communication analogue aux passages 6 et 7 indiqués sur la figure 2, est suffisante pour permettre le séchage non seulement de l'enveloppe mais aussi de la laine de cellulose 22 qui, pour être agglomérée en toute forme utile (sphères, cubes, anneaux, etc.),est mouillée et agglomérée avec une colle aqueuse, après passage dans un four ou une étuve à 40 °C pendant environ 1 heure.

Les éléments ou cellules 21 de rétention d'eau sont réalisés de préférence sous la forme de billes de 8 à 10 mm de diamètre que l'on peut conditionner en sacs aptes à la manutention humaine (de 20 à 100 kg) mais aussi en grands sacs (dénommés big bags) de 500 à 1000 kg. On pourrait aussi les réaliser sous forme de petits cylindres ou de petits cubes de dimensions sensiblement équivalentes et livrer les éléments ou cellules de rétention d'eau mélangés à de la terre pour la culture des végétaux.

Ces éléments peuvent également être mélangés à des semis ou graines de semence. On adapte de préférence la taille des éléments à la taille des graines de semence. On peut par exemple utiliser des éléments présentant un volume similaire au volume des graines.

Pour fabriquer en série les éléments ou cellules de rétention d'eau représentés à la figure 6, on procède généralement de la façon suivante :
- on moule de la matière cellulosique telle que de la laine de cellulose humidifiée à la forme de série choisie : bille, sphère, cylindre, cube, etc...
- on procède au séchage de la laine de cellulose moulée ;
- on enrobe les cellules avec de la résine acrylique, la résine représentant 1,5 et 2,5 % en poids du poids de l'enveloppe 23 finie ;
- on procède à un surfaçage des cellules avec un minéral en grains de granulométrie comprise entre 0,8 et 1,2 mm et qui assure la perméabilité ultérieure plus réduite que celle de la laine de cellulose. Le minéral peut comprendre des pierres calcaires broyées à la granulométrie indiquée de 0,8 à 1,2 mm, mais aussi et de préférence par de la poudre d'ardoise broyée à cette granulométrie et combinée le cas échéant à du talc en poudre de granulométrie plus fine et qui forme un mélange qui s'est révélé présenter, en combinaison avec la résine acrylique, une résistance mécanique plus élevée que les granulats de pierres calcaires et une porosité plus réduite facilitant la restitution très lente de l'eau accumulée dans les espaces intercalaires ;
- le produit final obtenu sous forme de boules, de billes, ou de cylindres ou de cubes ou de parallélépipèdes ou d'anneaux est ensuite séché à une température relativement basse de 40 °C qui pourrait être obtenu dans les pays chauds par simple exposition au soleil et qui favorise la polymérisation de la résine acrylique et il est finalement conditionné en sacs pour être expédié à un utilisateur ou à un point d'utilisation tel qu'un talus sec ou une zone sèche à végétaliser de façon pérenne. Le produit final comprenant une pluralité de cellules peut être mélangé à de la terre à un engrais ou à un agent promoteur pour la croissance ou la culture de végétaux, telle que de la terre végétale ordinaire ou de la tourbe.

Les éléments ou cellules de rétention d'eau peuvent, en synergie, remplir des fonctions annexes à la rétention d'eau. Ils peuvent par exemple être colorés par ajout de pigments de couleur à l'enveloppe 4, 20, 23 et le cas échéant, également au matériau perméable 2, 19, 22 du coeur de l'élément afin d'obtenir un effet esthétique ou de reconnaissance visuelle des cellules ou éléments de rétention d'eau, notamment pour remplacer les écorces d'arbres (notamment de pin) mises en place autour des pieds d'arbres ou d'arbustes pour étouffer le développement de la végétation et retenir l'eau au pied de ces arbres ou arbustes. De tels éléments peuvent par exemple être présentés sous forme de billes.

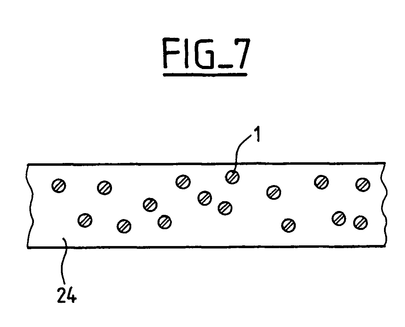

Par ailleurs, pour tuer les mauvaises herbes, l'enveloppe 4, 20, 23 et le cas échéant, également le matériau perméable 2, 19, 22 peut contenir de la poudrette de cuivre ou un autre produit détruisant les mauvaises herbes et les végétations intempestives. Les éléments et cellules de rétention d'eau peuvent également être commercialisés, mélangés à de la terre végétale ou à de la tourbe ou équivalent vendu en tout conditionnement adéquat (en vrac, en sacs ordinaires, en sacs géants, en sachets pour pots) pour supporter une végétation délicate ou d'agrément afin de conférer des propriétés de rétention d'eau à cette terre. Les cellules de rétention d'eau en laine de cellulose peuvent également, à l'état sec, être utilisées comme matériau de base pour réaliser des panneaux isolants thermiques et phoniques et anti-rayonnement, et sont ainsi susceptibles d'applications différentiées à l'état sec et à l'état humidifié (après mise en place). Selon une application originale, les éléments ou cellules de rétention d'eau, le cas échéant colorés pour produire un effet esthétique peuvent être utilisés comme éléments de couverture et de protection de terrasses à la place du gravier ou des gros gravillons utilisés à cet effet. Ils remplissent alors un rôle de rétention d'eau en cas de pluie ou de neige et ils évacuent ensuite lentement cette eau par évaporation en réalisant une sorte "d'isolation thermique" de la terrasse à l'égard du rayonnement solaire. On peut également envisager d'inclure des éléments 1 de l'invention dans une colle ou matrice 24 à base de ciment, de plâtre ou de résine synthétique comme renfort d'isolation phonique et thermique. Un tel exemple est représenté à la figure 7.

Les applications des coussins, des cellules et des éléments (billes) de rétention d'eau décrits et représentés ci-dessus, sont multiples. Ils peuvent être placés en sous-couches des remblais d'ouvrage d'art pour retenir l'eau de déversement susceptible de dégrader les équipements placés en aval et pour éviter l'affaissement de certains sols très poreux. Cependant, l'application la plus courante de ces coussins et cellules de rétention d'eau paraît devoir concerner l'irrigation ou l'humidification des cultures ou de la végétation du sol poussant au-dessus d'un sol ou d'un soubassement sec ou perdant rapidement son humidité, par exemple par dépôt du ou des coussin(s) ou cellules ou éléments sur une terrasse végétalisée ou au fond d'un bac à plantes et couverture de ces coussins ou cellules ou éléments par un sol approprié aux cultures envisagées. Selon un autre mode d'application, le ou les coussin(s) ou cellule(s) de rétention d'eau sont déposés sur un sol trop poreux ou perméable pour former une barrière entre une terre rapportée sur ce sol trop poreux et destinée à supporter par exemple un massif de plantes ou une végétation d'agrément.

Bien entendu, la présente invention n'est pas limitée aux modes de réalisation décrits et représentés, mais elle s'applique à toutes les variantes aisément accessibles à l'homme de l'art.

## Revendications

1. Elément de rétention d'eau comprenant :
- un matériau perméable à l'eau (2, 22)
- apte à absorber l'eau et à libérer progressivement l'eau absorbée dans un milieu sec ;
- présentant des espaces intercalaires (3) de rétention d'eau ; et
- une enveloppe (4, 23)
- entourant le matériau perméable à l'eau ;
- moins perméable à l'eau que ledit matériau perméable ; et
- comprenant un ou plusieurs produits minéraux agglomérés par une résine synthétique.

2. Elément de rétention d'eau selon la revendication 1, **caractérisé en ce que** l'enveloppe inclut en outre un produit promoteur.

3. Elément de rétention d'eau selon la revendication 1 ou 2, **caractérisé en ce que** l'enveloppe inclut en outre un herbicide.

4. Elément de rétention d'eau selon l'une des revendications précédentes, **caractérisé en ce que** le matériau perméable comprend en outre du polystyrène d'une granulométrie comprise entre 1 et 2mm.

5. Elément de rétention d'eau selon la revendication 4, **caractérisé en ce que** ledit polystyrène est présent sous forme de poudre et/ou sous forme de barrettes ou de billes.

6. Elément de rétention d'eau selon l'une des revendications précédentes, dans lequel le matériau perméable (22) comprend une matière à base de cellulose agglomérée sur elle-même et de forme sensiblement répétitive.

7. Elément de rétention d'eau selon la revendication 6, dans lequel la matière à base de cellulose est de la laine de cellulose.

8. Elément de rétention d'eau selon l'une des revendications 6 ou 7 dans lequel l'élément de rétention d'eau présente la forme générale de cylindre, cube, parallélépipède, anneau, boule, sphère ou bille.

9. Elément de rétention d'eau selon la revendication 6 ou 7 dans lequel l'élément de rétention d'eau présente la forme d'une bille d'un diamètre compris entre 8 et 10 mm.

10. Elément de rétention d'eau selon l'une quelconque des revendications précédentes, dans lequel la résine synthétique est une résine acrylique mélangée à raison de 2 à 5 % en poids avec le ou les produits minéraux agglomérés.

11. Elément de rétention d'eau selon l'une quelconque des revendications précédentes, dans lequel le ou les produits minéraux comprennent de l'ardoise en poudre ou du talc en poudre.

12. Elément de rétention d'eau selon l'une quelconque des revendications précédentes, dans lequel le ou les produits minéraux comportent des granulats (2) de pierres calcaires d'une granulométrie comprise entre 0,8 et 1,2 mm.

13. Elément de rétention d'eau selon l'une quelconque des revendications 1 à 3, dans lequel le matériau perméable comprend des granulats (2) de pierres calcaires présentant une granulométrie comprise entre 0 et 5 mm selon la répartition suivante en poids :
- 0 à 1 mm : environ 10 % ;
- 1 à 2 mm : environ 15 % ;
- 2 à 5 mm : environ 75 % ;
ces granulats étant aptes à retenir de l'eau dans les espaces intercalaires (3) entre les granulats, à raison d'au moins 90 % du poids des granulats secs.

14. Elément de rétention d'eau selon la revendication 13, dans lequel un volume de granulats (2) de pierres calcaires est aggloméré et enrobé par un liant formant une enveloppe (4) rigide, perméable à l'eau et comprenant une poudre minérale desdites pierres calcaires, agglomérée et solidarisée aux granulats sous-jacents.

15. Elément de rétention d'eau selon la revendication 14, dans lequel le volume de granulats (2) entouré de son enveloppe rigide (4) présente la forme générale d'un cylindre allongé (1).

16. Elément de rétention d'eau selon la revendication 15, dans lequel le diamètre du cylindre allongé (1) est compris entre 60 et 100 mm, et la longueur du cylindre est comprise entre 0,5 m et 1 m.

17. Elément de rétention d'eau selon l'une quelconque des revendications 14 à 16, dans lequel le liant de l'enveloppe rigide (4) perméable à l'eau comprend :
- une poudre minérale comprenant un dérivé des granulats (2) de pierres calcaires ; et
- des parties en polystyrène d'une granulométrie inférieure à 2mm.

18. Elément de rétention d'eau selon la revendication 17, dans lequel les parties en polystyrène ont une forme de billes ou de barrettes.

19. Elément de rétention d'eau selon l'une des revendications 14 à 18, dans lequel le liant comprend en outre :
- environ 10 % en volume de résine acrylique ; et
- environ 15 % en volume de poudre de polystyrène.

20. Elément de rétention d'eau selon l'une quelconque des revendications 1 à 14, dans lequel le matériau perméable à l'eau (2, 22) entouré de son enveloppe (4, 23) présente des formes répétitives de sphères ou billes (21), de cylindres, de cubes, de parallélépipèdes ou d'anneaux.

21. Elément de rétention d'eau selon la revendication 20, dans lequel les formes répétitives de sphères ou billes ou voisines de ces dernières en cylindres, cubes, parallélépipèdes ou anneaux présentent une granulométrie comprise entre 1 et 5 mm.

22. Coussin de rétention d'eau, **caractérisé en ce qu'**il comporte :
- une coque inférieure (10) en un matériau imperméable à l'eau et imputrescible, ladite coque formant au moins un bac allongé (11a à 11d) de rétention de liquide,
- au moins un élément de rétention d'eau (1a à 1d) selon la revendication 14;
- l'élément de rétention d'eau (1a à 1d) étant placé dans le bac allongé et la moitié inférieure de l'élément de rétention d'eau (1a à 1d) épousant sensiblement la forme intérieure du bac allongé (11a à 11d) de rétention de liquide et sensiblement la moitié supérieure de l'élément de rétention d'eau dépassant au-dessus de ladite coque inférieure (10) ;
- une enveloppe supérieure (15) en nappe de fibres polyester imputrescibles, et perméable à l'eau, qui est fixée ou accrochée à la coque inférieure (10), retenant le ou les élément(s) de rétention d'eau en position dans leur bac allongé de rétention d'eau.

23. Coussin de rétention d'eau selon la revendication 22, **caractérisé en ce que** :
- la coque inférieure (10) comporte plusieurs bacs de rétention d'eau allongés (11a à 11d) sensiblement parallèles, présentant une section transversale sensiblement semi-circulaire et dans chacun desquels est placé un élément de rétention d'eau (1a à 1d) qui présente une forme sensiblement cylindrique et des dimensions de longueur et de diamètre légèrement inférieures à celles du bac allongé ;
- des intervalles (14) sensiblement plats et horizontaux en position de service, sont ménagés entre les bacs allongés (11a à 11d) et au-delà des bacs d'extrémité, et l'enveloppe supérieure (15) en nappe est fixée sur ces intervalles (14) sensiblement plats.

24. Coussin de rétention d'eau selon l'une des revendications 22 ou 23, **caractérisé en ce que** la coque inférieure (18, 10) est réalisée en un matériau moulé tel que le polyéthylène, le bitume armé, les polyoléfines HDPE et présente une souplesse adéquate pour s'adapter aux irrégularités du support ou sol.

25. Procédé de fabrication d'un élément selon les revendications 17 et 19, comprenant les étapes de :
- fourniture d'un liant incluant une poudre comprenant un dérivé de la matière des pierres calcaires ;
- ajout d'environ 10% en volume de résine acrylique au liant ;
- ajout d'environ 15% en volume de poudre de polystyrène au liant ;
- mise à l'état pâteux et collant du liant ;
- agglomération et enrobage d'un volume de granulats de pierres calcaires (2) avec le liant ;
- séchage du liant et cuisson de l'élément de rétention d'eau ainsi aggloméré jusqu'à une température d'environ 300 C pendant une durée supérieure à ½ heure pour provoquer l'évacuation initiale de l'eau des granulats et du liant puis simultanément l'adhérence du liant sec sur lui-même et sur les granulats de pierres calcaires sous-jacents, la volatilisation au moins partielle du polystyrène pour donner de la porosité au liant.

26. Procédé de fabrication selon la revendication 25, comprenant en outre une étape d'ajout de parties en polystyrène présentant une granulométrie inférieure à 2mm au liant.

27. Procédé de fabrication selon la revendication 25 ou 26, dans lequel l'étape de mise à l'état pâteux ou collant comprend une phase d'adjonction d'eau.

28. Procédé de fabrication d'un élément de rétention d'eau selon l'une quelconque des revendications 7 à 12, comprenant les étapes de:
- moulage de la matière cellulosique à la forme de série choisie pour les éléments ;
- séchage de la matière cellulosique ;
- enrobage des éléments avec de la résine acrylique représentant entre 1,5 et 2,5% en poids de l'enveloppe (23) finie ;
- surfaçage ou enrobage par roulage des éléments avec un minéral en grains de granulométrie comprise entre 0,8 et 1,2 mm ;
- séchage des éléments obtenus à une température de l'ordre de 40 à 50°C pendant une durée apte à provoquer la polymérisation de la résine acrylique ;
- conditionnement des éléments obtenus pour expédition en vrac ou en sacs appropriés.

29. Procédé selon la revendication 26, dans lequel la matière cellulosique est remplacée par de la laine minérale et/ou le séchage et la polymérisation de la résine acrylique sont réalisés par exposition au soleil.

30. Procédé d'application d'au moins un élément selon l'une quelconque des revendications 1 à 21 ou d'au moins un coussin selon l'une quelconque des revendications 22 à 24 à l'irrigation ou à l'humidification des cultures ou de végétaux poussant au-dessus d'un sol ou d'un soubassement sec, par dépôt desdits éléments sur ledit sol ou soubassement sec, comprenant le recouvrement des éléments (1, 9, 21) par un sol approprié aux dites cultures ou végétaux.

31. Procédé d'application d'au moins un élément selon l'une quelconque des revendications 1 à 21 ou d'au moins un coussin selon l'une quelconque des revendications 22 à 24 à la formation d'une barrière entre une terre rapportée appropriée à la culture et une terre de soubassement poreuse inapte à la rétention de l'eau, comprenant la dépose des éléments (1, 9, 21) sur la terre de soubassement en dessous d'un massif de plantes ou en dessous d'une zone de terre rapportée riche destinée à supporter une végétation d'agrément.

32. Procédé d'application d'au moins un élément selon l'une quelconque des revendications 1 à 21 ou d'au moins un coussin selon l'une quelconque des revendications 22 à 24 à la formation d'isolations phoniques ou thermiques, comprenant leur inclusion dans un matériau de matrice.

## Claims

1. A water-retaining element comprising:
- a water permeable material (2, 22)
- adapted to absorb water and progressively release the water absorbed in a dry medium;
- having intermediate water retaining spaces (3); and
- a casing (4, 23)
- surrounding the water permeable material;
- less permeable to water than said permeable material; and
- comprising one or several inorganic products agglomerated by a synthetic resin.

2. The water-retaining element according to claim 1, **characterised in that** the casing further includes a promoter product.

3. The water-retaining element according to claim 1 or 2, **characterised in that** the casing further includes a herbicide.

4. The water-retaining element according to one of the preceding claims, **characterised in that** the permeable material further comprises polystyrene of a particle size comprised between I and 2 mm.

5. The water-retaining element according to claim 4, **characterised in that** the said polystyrene is present in the form of powder and/or in the form of small bars or of balls.

6. The water-retaining element according to one of the preceding claims, in which the permeable material (22) comprises a cellulose-based material agglomerated to itself and of substantially repetitive shape.

7. The water-retaining element according to claim 6, in which the cellulose based material is cellulose wool.

8. The water-retaining element according to one of claims 6 or 7, in which the water-retaining element has a generally cylindrical, cubic, parallelepiped, ring, large ball, spherical or small ball shape.

9. The water-retaining element according to claim 6 or 7, in which the water-retaining element has the form of a small ball of diameter comprised between 8 and 10 mm.

10. The water-retaining element according to any one of the preceding claims, in which the synthetic resin is an acrylic resin mixed in an amount of from 2 to 5% by weight with the agglomerated inorganic product or products.

11. The water-retaining element according to any one of the preceding claims, in which the inorganic product or products comprises/comprise powered slate or powdered talc.

12. The water-retaining element according to any one of the preceding claims, in which the inorganic product or products comprises/comprise granulate (2) of calciferous stone of particle size comprised between 0.8 and 1.2 mm.

13. The water-retaining element according to any one of claims 1-3, in which the permeable material comprises granulate (2) of calciferous stone having a particle size comprised between 0 and 5 mm with the following weight distribution:
- from 0-1 mm: about 10%;
- from 1-2 mm: about 15%;
- from 2-5 mm: about 75%; this granulate being adapted to retain water in the intermediate spaces (3) between the granulate, in an amount of at least 90% by weight of the dry granulate.

14. The water-retaining element according to claim 13, in which the volume of calciferous stone and granulate (2) is agglomerated and covered by a binder forming a rigid casing (4), permeable to water and comprising an inorganic powder of said calciferous stone, agglomerated and rendered integral with subjacent granulate.

15. The water-retaining element according to claim 14, in which the volume of granulate (2) surrounded by its rigid casing (4) has the general shape of an elongated cylinder (1).

16. The water-retaining element according to claim 15, in which the diameter of the elongated cylinder (1) is comprised between 60 and 100 mm, and the length of the cylinder is comprised between 0.5 m and 1 m.

17. The water-retaining element according to any one of claims 14-16, in which the binder for the rigid water-permeable casing (4) comprises:
- an inorganic powder comprising a derivative of the calciferous stone granulate (2); and
- portions in polystyrene of a particle size less than 2 mm.

18. The water-retaining element according to claim 17, in which the portions in polystyrene have a small ball or small bar shape.

19. The water-retaining element according to one of claims 14-18, in which the binder further comprises:
- about 10% by volume of acrylic resin; and
- about 15% by volume of polystyrene powder.

20. The water-retaining element according to any one of claims 1-14, in which the water permeable material (2, 22) surrounded by its casing (4, 23) has repeating shapes of spheres or small balls (21), of cylinders, of cubes, of parallelepipeds or of rings.

21. The water-retaining element of claim 20, in which the repeating shapes of spheres or balls or close thereto in cylinders, cubes, parallelepipeds or rings have a particle size comprised between I and 5 mm.

22. A water-retaining cushion, **characterised in that** it comprises:
- a lower shell (10) in a material impermeable to water and non-rotting, said shell forming at least one elongated tray (11a-11d) for liquid retention,
- at least one water-retaining element (1a-1d) according to claim 14;
- the water-retaining element (1a-1d) being placed in the elongated tray and the lower half of the water-retaining element (1a-1d) substantially matching the inner shape of the liquid retaining elongated tray (11a-11d) and substantially the upper half of the water retaining element projecting above said lower shell (10);
- an upper envelope (15) in non-rotting polyester fibre, permeable to water, secured or fastened to the lower shell (10), retaining the water retaining element or elements in position in their elongated water retaining tray.

23. The water-retaining cushion according to claim 22, **characterised in that**:
- the lower shell (10) comprises several substantially parallel elongated water retaining trays (11a-11d), of substantially semi-circular cross section and in each one of which a water-retaining element (1a-1d) is placed having a substantially cylindrical shape and of length and diameter or dimensions slightly less than those of said elongated tray;
- gaps (14) which are substantially flat and horizontal in their service position are provided between the elongated trays (11a-11d) and extending beyond the end trays, and the upper envelope (15) in mat form is secured onto these substantially flat gaps (14).

24. Water retaining cushion according to one of claims 20 to 23, **characterised in that** the lower shell (18, 10) is made of a molded material such as polyethylene, reinforced bitumen, HDPE polyolefins and has sufficient flexibility to adapt to irregularities in the support or ground.

25. Method for producing an element according to claims 17 and 19, comprising the steps of:
- supplying a binder including a powder comprising a derivative of the calciferous stone material;
- adding about 10% by volume acrylic resin to the binder;
- adding about 15% by volume polystyrene powder to the binder; rendering the binder sticky and pasty;
- agglomerating and surrounding a volume of the calciferous stone granulate (2) with the binder;
- drying the binder and baking the thus agglomerated water retaining element up to a temperature of around 300 ° C for a duration greater than half-an-hour to bring about initial evacuation of water from the granulate and binder, then, simultaneously, adhesion of the dried binder to itself and to the subjacent calciferous stone granulate, at least partially volatilising the polystyrene in order to impart porosity to the binder.

26. Production method according to claim 25, further comprising a step of adding portions in polystyrene having a particle size less than 2 mm to the binder.

27. Production method according to claim 25 or 26, in which the step of rendering sticky or pasty comprises a water addition phase.

28. Production method for a water retaining element according to any one of claims 7-12, comprising the steps of:
- molding cellulosic material to the series production shape chosen for the elements;
- drying the cellulosic material;
- surrounding the elements with acrylic resin making up between 1.5 and 2.5% by weight of the finished casing (23);
- surfacing or roller coating the elements with inorganic matter in grains of particle size comprised between 0.8 and 1.2 mm;
- drying the elements obtained to a temperature of around 40-50 ° C for a duration suitable for bringing about polymerization of the acrylic resin;
- packaging the elements obtained for shipping in bulk or in suitable bags.

29. The method according to claim 26, in which the cellulosic material is replaced by mineral wool and/or drying and polymerization of the acrylic resin are performed by exposure to sunlight.

30. A method for applying at least one element according to any one of claims 1 - 21 or at least one cushion according to any one of claims 22 - 24 to the irrigation or humidification of crops or vegetables growing above ground or a dry sub-foundation, by depositing said elements on said ground or dry sub-foundation, comprising covering the elements (1, 9, 21) with a soil suitable for said crops or vegetables.

31. The method for applying at least one element according to any one of claims 1-21 or at least one cushion according to any one of claims 22-24 to the creation of a barrier between soil brought from outside suitable for cultivation, and a porous sub-foundation of earth unsuitable for retaining water, comprising depositing elements (1, 9, 21) on the sub-foundation earth below a bed of plants or below an area of rich soil brought from outside designed to act as support for decorative vegetation.

32. The method for applying at least one element according to any one of claims 1-21 or at least one cushion according to any one of claims 22-24 to the creation of sound or thermal insulation means, comprising inclusion thereof in a matrix material.

## Patentansprüche

1. Element zur Wasserrückhaltung, umfassend:
- ein wasserdurchlässiges Material (2, 22)
- das in der Lage ist, Wasser zu absorbieren und das absorbierte Wasser nach und nach in ein trockenes Medium abzugeben;
- das Zwischenräume (3) zur Wasserrückhaltung aufweist; und
- eine Hülle (4, 23)
- die das wasserdurchlässige Material umgibt;
- die weniger wasserdurchlässig ist als das durchlässige Material; und
- die ein oder mehrere mineralische Produkte umfasst, die mit einem synthetischen Harz agglomeriert sind.

2. Element zur Wasserrückhaltung nach Anspruch 1, **dadurch gekennzeichnet, dass** die Hülle ferner ein Produkt zur Wachstumsförderung einschließt.

3. Element zur Wasserrückhaltung nach Anspruch 1 oder 2, **dadurch gekennzeichnet, dass** die Hülle ferner ein Herbizid einschließt.

4. Element zur Wasserrückhaltung nach einem der vorhergehenden Ansprüche, **dadurch gekennzeichnet, dass** das durchlässige Material ferner Polystyrol mit einer Granulometrie im Bereich zwischen 1 und 2 mm umfasst.

5. Element zur Wasserrückhaltung nach Anspruch 4, **dadurch gekennzeichnet, dass** das Polystyrol in Form von Pulver und/oder in Form von Stäbchen oder Perlen vorhanden ist.

6. Element zur Wasserrückhaltung nach einem der vorhergehenden Ansprüche, worin das durchlässige Material (22) ein Material auf der Basis von mit sich selbst agglomerierter Cellulose umfasst und dessen Form sich im Wesentlichen wiederholt.

7. Element zur Wassarrückhaltung nach Anspruch 6, worin das Material auf der Basis von Cellulose Cellulosewolle ist.

8. Element zur Wasserrückhaltung nach einem der Ansprüche 6 oder 7, worin das Element zur Wasserrückhaltung die allgemeine Form eines Zylinders, Würfels, Parallelpipeds, Rings, einer großen Kugel, Kugel oder Perle aufweist.

9. Element zur Wasserrückhaltung nach Anspruch 6 oder 7, worin das Element zur Wasserrückhaltung die Form einer Perle mit einem Durchmesser im Bereich zwischen 8 und 10 mm aufweist.

10. Element zur Wasserrückhaltung nach einem der vorhergehenden Ansprüche, worin das synthetische Harz ein Acrylharz ist, das in einem Verhältnis von 2 bis 5 Gew.-% mit dem oder den agglomerierten mineralischen Produkten gemischt ist.

11. Element zur Wasserrückhaltung nach einem der vorhergehenden Ansprüche, worin das oder die mineralischen Produkte pulverförmigen Schiefer oder pulverförmigen Talk umfassen.

12. Element zur Wasserrückhaltung nach einem der vorhergehenden Ansprüche, worin das oder die mineralischen Produkte Granulat (2) aus Kalkstein mit einer Granulometrie im Bereich zwischen 0,8 und 1,2 mm umfasst.

13. Element zur Wasserrückhaltung nach einem der Ansprüche 1 bis 3, worin das durchlässige Material Granulat (2) aus Kalkstein umfasst, das eine Granulometrie im Bereich zwischen 0 und 5 mm gemäß der folgenden Gewichtsverteilung aufweist:
- 0 bis 1 mm: etwa 10 %
- 1 bis 2 mm: etwa 15 %
- 2 bis 5 mm: etwa 75 %,
wobei dieses Granulat in der Lage ist, Wasser in den Zwischenräumen (3) zwischen dem Granulat in einem Verhältnis von mindestens 90 Gew.-% des trockenen Granulats zurückzuhalten.

14. Element zur Wasserrückhaltung nach Anspruch 13, worin ein Volumen von Granulat (2) aus Kalkstein agglomeriert und von einem Bindemittel überzogen ist, das eine starre Hülle (4) bildet, die wasserdurchlässig ist, und die ein mineralisches Pulver aus Kalkstein umfasst, das mit dem darunter liegenden Granulat agglomeriert und verbunden ist.

15. Element zur Wasserrückhaltung nach Anspruch 14, worin das Volumen des Granulats (2), das von seiner starren Hülle (4) umgeben ist, die allgemeine Form eines länglichen Zylinders (1) aufweist.

16. Element zur Wasserrückhaltung nach Anspruch 15, worin der Durchmesser des länglichen Zylinders (1) im Bereich zwischen 60 und 100 mm, und die Länge des Zylinders im Bereich zwischen 0,5 m und 1 m liegt.

17. Element zur Wasserrückhaltung nach einem der Ansprüche 14 bis 16, worin das Bindemittel der wasserdurchlässigen starren Hülle (4) umfasst:
- ein mineralisches Pulver, das ein Derivat des Granulats (2) aus Kalkstein umfasst; und
- Teile aus Polystyrol mit einer Granulometrie kleiner als 2 mm.

18. Element zur Wasserrückhaltung nach Anspruch 17, worin die Teile aus Polystyrol die Form von Perlen oder Stäbchen haben.

19. Element zur Wasserrückhaltung nach einem der Ansprüche 14 bis 18, worin das Bindemittel ferner umfasst:
etwa 10 Vol.-% Acrylharz; und
etwa 15 Vol.-% Polystyrolpulver.

20. Element zur Wasserrückhaltung nach einem der Ansprüche 1 bis 14, worin das wasserdurchlässige Material (2, 22), das von seiner Hülle (4, 23) umgeben ist, sich wiederholende Formen von Kugeln oder Perlen (21), Zylindern, Würfeln, oder Parallelepipeden oder Ringen aufweist.

21. Element zur Wasserrückhaltung nach Anspruch 20, worin die sich wiederholenden Formen von Kugeln oder Perlen oder den letztgenannten ähnlich, von Zylindern, Würfeln, Parallelepipeden oder Ringen, eine Granulometrie im Bereich zwischen 1 und 5 mm aufweisen.

22. Kissen zur Wasserrückhaltung, **dadurch gekennzeichnet, dass** es umfasst:
- eine untere Schale (10) aus einem wasserundurchlässigen und nicht verrottenden Material, wobei die Schale mindestens einen länglichen Behälter (11a bis 11d) zur Flüssigkeitsrückhaltung bildet,
- mindestens ein Element zur Wasserrückhaltung (1a bis 1d) nach Anspruch 14;
- wobei das Element zur Wasserrückhaltung (1a bis 1d) in dem länglichen Behälter angeordnet ist und die untere Hälfte des Elements zur Wasserrückhaltung (1a bis 1d) im Wesentlichen eng an der inneren Form des länglichen Behälters (11a à 11d) zur Flüssigkeitsrückhaltung anliegt und die obere Hälfte des Elements zur Wasserrückhaltung im Wesentlichen über die untere Schale (10) hinausragt;
- eine obere Hülle (15) aus einem Tuch aus nicht verrottenden Polyesterfasern, und wasserdurchlässig, die an der unteren Schale (10) fixiert oder befestigt ist, wodurch das oder die Elemente zur Wasserrückhaltung in ihrem länglichen Behälter zur Wasserrückhaltung in Position gehalten werden.

23. Kissen zur Wasserrückhaltung nach Anspruch 22, **dadurch gekennzeichnet, dass:**
- die untere Schale (10) mehrere im Wesentlichen parallele längliche Wasserrückhaltebehälter (11a bis 11d) umfasst, die einen im Wesentlichen halbkreisförmigen Querschnitt aufweisen und worin jeder von ihnen in einem Element zur Wasserrückhaltung (1a bis 1d) angeordnet ist, das eine im Wesentlichen zylindrische Form und Abmessungen für Länge und Durchmesser aufweist, die ein wenig unterhalb derjenigen des länglichen Behälters liegen;
- im Wesentlichen flache und in Betriebsposition horizontale Abstände (14) zwischen den länglichen Behältern (11a bis 11d) und über die Behälterenden hinaus angebracht sind, und die obere Hülle (15) aus Tuch wird auf diesen im Wesentlichen flachen Intervallen (14) fixiert.

24. Kissen zur Wasserrückhaltung nach einem der Ansprüche 22 oder 23, **dadurch gekennzeichnet, dass** die untere Schale (18, 10) aus einem Formstoff, wie etwa Polyethylen, armiertem Bitumen, HDPE-Polyolefinen ausgeführt wird und eine angemessene Flexibilität aufweist, um sich an die Unregelmäßigkeiten des Trägers oder des Bodens anzupassen.

25. Verfahren zur Fertigung eines Elements nach den Ansprüchen 17 und 19, das die folgenden Schritte umfasst:
- Bereitstellen eines Bindemittels, das ein Pulver einschließt, das ein Derivat des Materials aus Kalkstein umfasst;
- Zugabe von etwa 10 Vol.-% Acrylharz zu dem Bindemittel;
- Zugabe von etwa 15 Vol.-% Polystyrolpulver zu dem Bindemittel;
- das Bindemittel in einen breiförmigen und klebenden Zustand bringen;
- Agglomeration und Überziehen eines Volumens von Granulat aus Kalkstein (2) mit dem Bindemittel;
- Trocknen des Bindemittels und Brennen des so agglomerierten Kissens bis zu einer Temperatur von etwa 300 °C während eines Zeitraums von mehr als 1/2 Stunde, um zuerst das Abführen von Wasser aus dem Granulat und dem Bindemittel, dann gleichzeitig die Haftung des trockenen Bindemittels an sich selbst und auf dem darunter liegenden Granulat aus Kalkstein, die mindestens teilweise Verflüchtigung des Polystyrols herbeizuführen, um dem Bindemittel Porosität zu verleihen.

26. Verfahren zur Fertigung nach Anspruch 25, das ferner einen Schritt der Zugabe von Polystyrolteilen zu dem Bindemittel umfasst, die eine Granulometrie kleiner als 2 mm aufweisen.

27. Verfahren zur Fertigung nach Anspruch 25 oder 26, worin der Schritt, bei dem das Bindemittel in breiförmigen oder klebenden Zustand gebracht wird, eine Phase der Wasserzufuhr umfasst.

28. Verfahren zur Fertigung eines Elements zur Wasserrückhaltung nach einem der Ansprüche 7 bis 12, das die Schritte umfasst:
- Formen des Cellulosematerials in der für die Elemente ausgewählten Serienform;
- Trocknen des Cellulosematerials;
- Überziehen der Elemente mit Acrylharz, das zwischen 1,5 und 2,5 Gew.-% der fertigen Hülle (23) darstellt;
- Oberflächenbehandlung oder Überziehen durch Rollen der Elemente mit einem Mineral mit Körnern mit Granulometrie im Bereich zwischen 0,8 und 1,2 mm;
- Trocknen der erhaltenen Elemente bei einer Temperatur in einer Größenordnung von 40 bis 50 °C während eines Zeitraums, der in der Lage ist, die Polymerisation des Acrylharzes herbeizuführen;
- Verpackung der erhaltenen Elemente zum Versand als Schüttgut oder in geeigneten Säcken.

29. Verfahren nach Anspruch 26, worin das Cellulosematerial durch Mineralwolle ersetzt ist und/oder das Trocknen und die Polymerisation des Acrylharzes durch Sonnenbestrahlung ausgeführt werden.

30. Verfahren zur Anwendung mindestens eines Elements nach einem der Ansprüche 1 bis 21 oder mindestens eines Kissens nach einem der Ansprüche 22 bis 24 zur Bewässerung oder Befeuchtung von Kulturen oder Pflanzen, die über dem Boden oder einem trockenen Grund wachsen, durch Ablage der Elemente auf der Erde oder dem trockenen Grund, die das Bedecken der Elemente (1, 9, 21) mit einem Boden umfasst, der für die Kulturen oder Pflanzen geeignet ist.

31. Verfahren zur Anwendung mindestens eines Elements nach einem der Ansprüche 1 bis 21 oder mindestens eines Kissens nach einem der Ansprüche 22 bis 24 zur Bildung einer Barriere zwischen einer zugeführten Erde, die für die Kultur geeignet ist, und einer Erde des porösen Grunds, die zur Wasserrückhaltung ungeeignet ist, die das Ablegen der Elemente (1, 9, 21) auf der Erde des Grunds unterhalb einer Strukturbepflanzung oder unter einer Zone aus zugeführter nährstoffreicher Erde umfasst, die dazu dient, eine Zierbepflanzung zu tragen.

32. Verfahren zur Anwendung mindestens eines Elements nach einem der Ansprüche 1 bis 21 oder mindestens eines Kissens nach einem der Ansprüche 22 bis 24 zur Bildung von Schall- oder Wärmeisolierungen, die deren Einschluss in ein Matrixmaterial umfasst.
